Europäisches Patentamt

European Patent Office

Office européen des brevets

(11) Publication number: **0 448 159 B1**

# EUROPEAN PATENT SPECIFICATION

(45) Date of publication of patent specification: **08.03.95** (51) Int. Cl.⁶: **C07F 9/02**, C08G 79/04, C08L 85/02

(21) Application number: **91200550.1**

(22) Date of filing: **13.03.91**

(54) **Removal of latent acidity from organophosphorus condensation products.**

(30) Priority: **23.03.90 US 499243**

(43) Date of publication of application:
**25.09.91 Bulletin 91/39**

(45) Publication of the grant of the patent:
**08.03.95 Bulletin 95/10**

(84) Designated Contracting States:
**DE FR GB**

(56) References cited:
**US-A- 3 954 917**
**US-A- 3 959 415**
**US-A- 4 199 534**
**US-A- 4 458 035**

(73) Proprietor: **Akzo Nobel N.V.**
**Velperweg 76**
**NL-6824 BM Arnhem (NL)**

(72) Inventor: **Jaffe, Fred**
**15 Sunset Drive**
**Ossining,**
**New York 10562 (US)**
Inventor: **Tomko, John**
**200 Beacon Hill Drive**
**Dobbs Ferry,**
**New York 10522 (US)**
Inventor: **Aaronson, Alan Michael**
**65-48 173 Street**
**Flushing Meadows,**
**New York 11365 (US)**

(74) Representative: **Schalkwijk, Pieter Cornelis et al**
**AKZO NOBEL N.V.**
**Patent Department (Dept. CO)**
**P.O. Box 9300**
**NL-6800 SB Arnhem (NL)**

EP 0 448 159 B1

**Description**

BACKGROUND OF THE INVENTION

The removal of latent acidity from organophosphorus condensation products to yield a product having an acceptable shelf life and low acidity is an active area of research. The presence of latent acidity, for example, can deactivate catalysts used in polyurethane foam manufacture, if such latent acid-containing organophosphorus condensation products are used as flame retardants.

The term "organophosphorus condensation products" is intended to cover oligomeric and polymeric organophosphorus condensation products which contain linkages (e.g., moieties containing P-O-P bonds and/or cyclic phosphorus structures) which may give rise to latent acidity. Representative types of organophosphorus condensation products include the types described in the following patents, which are each incorporated herein by reference as illustrating representative examples of such materials:

1. U.S. Patent No. 3,891,727 to E. D. Weil which illustrates oligomer compositions formed by the condensation of beta-haloalkyl esters of pentavalent phosphorus acids;

2. U.S. Patent No. 3,896,187 to E. D. Weil which relates to liquid poly(haloethyl-ethyleneoxy)phosphoric acid esters by condensation of tris(2-haloethyl)phosphate;

3. U.S. Patent No. 3,959,414 to K.S. Shim et al. which illustrates phosphorus containing oligomers obtained by the self-condensation of beta-haloalkyl esters of pentavalent phosphorus acids or the condensation of the esters with alkyl esters of a pentavalent phosphorus acid;

4. U.S. Patent No. 4,012,463 to E. N. Walsh et al. which illustrates products derived from the self-condensation of the previously described esters or by the condensation of those esters with an alkyl ester of a pentavalent phosphorus acid;

5. U.S. Patent No. 4,199,534 to R. B. Fearing which relates to poly(oxyorganophosphate/phosphonate) materials; and

6. U.S. Patent No. 4,458,035 of T. A. Hardy et al. which relates to oligomeric phosphate esters formed by reaction of $P_2O_5$ with a trialkyl or tris(haloalkyl) phosphate.

Also intended to be included within the class of organophosphorus condensation products treatable by the instant invention are products formed by reaction of $P_2O_5$ with triaryl phosphates or trialkyl or triarylphosphonates and with alkyl aryl or aryl combinations of these phosphates or phosphonates.

The above-referenced Hardy et al. patent indicates that the use of an alcohol and a Lewis acid catalyst can be useful in removing latent acidity from the oligomeric phosphate esters described therein. Although this technique gives a measurable improvement, further improvement would be desirable.

SUMMARY OF THE PRESENT INVENTION

The present invention relies upon the use of a combination of Lewis acid catalyst, alcohol and an organoamine (e.g., trialkyl or triarylamine or a mono- or diamine) to treat the previously described class of organophosphorus condensation product to remove latent acidity therefrom.

DETAILED DESCRIPTION OF THE PRESENT INVENTION

The organophosphorus condensation products treatable by the instant invention can most broadly be viewed as having various amounts of latent acid species which, upon standing, may give rise to acidic species. Representative examples are listed hereinbefore.

The types of Lewis acid catalysts usable herein include those described in U.S. Patent Nos. 4,012,463 and 4,458,035, for example, and include such materials as stannous octoate, boron trifluoride, magnesium chloride, titanium tetrachloride, zinc chloride, antimony trichloride, and the like in conventional amounts (e.g., about 0.1% to about 5%, by weight of the material treated).

Likewise, the alcohol is also described in the previously mentioned patents and includes alcohols of the formula ROH where R can be a $C_1$-$C_{12}$ substituted or unsubstituted alkyl group or a substituted or unsubstituted aryl group. Included are methanol, ethanol, isopropanol, and the like. This component can be used in conventional amount (e.g., from about 1% to about 100%, by weight of the material treated). It is within the contemplation of the instant invention to use the alcohol either as an additive to or as a solvent for the organophosphorus condensation products which are treated.

The novel feature of the instant invention is use of an organoamine (either a mono-, di- or triorganoamine) in accordance with the process described therein.

Trialkylamines particularly those containing lower alkyl groups (e.g., 1-4 carbon atoms) can be used.

2

Representative amines include trimethylamine, triethylamine, 2,6-lutidine, 4,4-dimethylamino pyridine, pyridine, and the like. It is deemed that the organoamine can be used in the instant process in an amount ranging from about 0.05% to about 5%, by weight of the material treated, preferably from about 0.1% to about 1%, by weight.

The instant invention is further understood by reference to the Examples which follow.

EXAMPLES 1-2

These Examples illustrate synthesis of an anhydride intermediate which is treated in later Examples in accordance with the present invention.

Dimethyl methylphosphonate (1.8 moles) containing 1%, by weight of the total charge, of triethylphosphite was added to an oxygen and water-free reaction flask and stirred with a mechanical stirrer for about thirty minutes until thorough mixing was achieved.

$P_2O_5$ (total amount: 1.0 mole) was then added from a small solid addition funnel (filled under nitrogen in a dry-box) in small portions (every five minutes) into the vigorously stirred mixture described above. The reaction was exothermic from the start. The reaction temperature was maintained so that it did not exceed about 80°C, and the addition time for the $P_2O_5$ was controlled within the range of forty-sixty minutes. After the $P_2O_5$ addition was completed, the pot temperature was increased to 120°C and heating continued for an additional hour. The anhydride intermediate was stripped at 120°C and 0.5 mm Hg for one and one-half hours to remove any unreacted dimethyl methylphosphonate. The HCl acid number for the product was 387.

When the above Example was repeated using 4.0 moles of dimethyl methylphosphonate and 3.5 moles of $P_2O_5$ the product had an HCl acid number of 490.

EXAMPLES 3-5

These Examples illustrate the sequential treatment of the anhydride intermediate of Example 1 with ethylene oxide (Example 3), then with ethylene oxide and stannous octoate catalyst (Example 4), and then with ethylene oxide, stannous octoate, and continuous addition of a mixture of isopropanol and triethylamine in accordance with the invention (Example 5). The amount of anhydride intermediate was 207.4 g (2.137 moles), of ethylene oxide was 94.04 g (2.1373 moles), and of triethylphosphite was 1.0 cc.

Examples 3 and 4 are presented for comparative purposes, and Example 5 is illustrative of the present invention.

Ethylene Oxide (EO) Addition

| Time (hrs/min) | Pot (°C) | EO (g) | EO % of Theory | KOH Acid # | HCl Acid # |
|---|---|---|---|---|---|
| 0/00 | 25 | 0 | 0 | | 387 |
| 0/15 | 35 | 5 | 5.3 | | |
| 1/30 | 66 | 26 | 28 | | |
| 2/30 | 60 | 48 | 51 | 152 | 272 |
| 3/00 | 60 | 57 | 61 | | |

Ethylene Oxide (EO) + Stannous Octoate (Sn(Oct)$_2$)

| Time (hrs/min) | Pot (°C) | EO (g) | EO % of Theory | Sn(Oct)$_2$ (g) | KOH Acid # | HCl Acid # |
|---|---|---|---|---|---|---|
| 3/20 | 34 | 57 | 61 | 0.4 | - | - |
| 3/45 | 41 | 63 | 67 | 0.8 | - | - |
| 4/15 | 49 | 74 | 79 | 0.8 | 115.2 | 235 |
| 4/25 | 65 | 74 | 79 | 1.2 | - | 0 |
| 6/45 | 80 | 80 | 85 | 1.2 | 60.0 | 146.3 |
| 8/45 | 80 | 90 | 96 | 1.5 | 50.6 | 130 |
| 11/00 | 80 | 96 | 102 | 1.5 | 36.2 | 113.7 |
| 14/30 | 80 | 107 | 114 | 1.5 | 17.1 | 77.1 |
| 16/30 | 80 | 108 | 125 | 1.5 | 12.7 | 65.1 |

Ethylene Oxide (EO), Stannous Octoate (SnOct)$_2$, Isopropanol/ET$_3$N

A mixture ("Mix") of 3 g of triethylamine and 100 cc of isopropanol was prepared and added dropwise in a continuous fashion every 20-25 seconds as follows. Ethylene oxide reflux was maintained throughout.

4

| Time (hrs/min) | Pot (°C) | Sn(Oct)$_2$ (g) | Mix (cc) | KOH Acid # | HCl Acid # |
|---|---|---|---|---|---|
| 16/30 | 80 | 1.5 | 0 | 12.7 | 65.1 |
| 18/30 | 80 | 1.5 | 4 | 5.9 | 45.8 |
| 21/00 | 80 | 1.75 | 11 | 4.2 | 25.6 |
| 23/00 | 80 | 1.75 | 15 | 3.2 | 16.7 |
| 26/30 | 80 | 1.75 | 23.5 | 1.9 | 6.7 |
| 34/00 | 80 | 2.25 | 43.5 | 1.0 | 6.9 |
| 37/00 | 80 | 2.55 | 54.8 | 1.1 | 6.3 |
| 42/00 | 80 | 2.55 | 69.0 | 0.6 | 3.8 |

The total triethylamine added was 2.07 g (0.7% of the total charge).

COMPARATIVE EXAMPLE 6

This Example is presented to illustrate a typical neutralization procedure using the ethylene oxide and stannous octoate to treat the product formed by the reaction of $P_2O_5$ and tris(chloropropyl) phosphate. Tris(chloropropyl) phosphate (2.0 moles) and $P_2O_5$ (1 mole) were reacted for about four hours at about 95°C-105°C to yield a product having acid numbers of 129 (HCl acid number)/110 (KOH acid number). As is known to persons of ordinary skill in the art the HCl acid number gives a measure of both the free acid due to P-OH linkages as well as the more intractable and harder to neutralize latent acidity due to linear or cyclic anhydrides containing P-O-P bonds, whereas the KOH acid number only is a measure of the former. Treatment of the crude product described above with ethylene oxide at 50°C-80°C for seven hours yielded a product having HCl/KOH acid numbers of 81.5/15.2. Treatment with ethylene oxide and 0.56% stannous octoate for thirty-two hours at 80°C followed by stripping of the product at 40°C and 0.5 mm Hg yielded a product with reduced acid numbers of 5.4/1.2 and a hydroxy number of 21.2.

EXAMPLE 7

This Example illustrates the type of results obtained with the instant invention for a product formed by reaction of $P_2O_5$ and tris(chloropropyl) phosphate. Tris(chloropropyl) phosphate (2.0 moles) and $P_2O_5$ (1 mole) were reacted for fifteen hours at 70°C to yield a crude product having HCl/KOH acid numbers of 197.5/105.9. Ethylene oxide treatment for twenty-one hours at 50°C-70°C reduced the acid number values to 97/19.6. Further treatment with ethylene oxide acid 0.8% stannous octoate for thirty-nine hours at 60°C yielded a product having reduced acid number values of 13.9/4.4.

The further treatment of the product described above with a mixture of 3 g triethylamine in 100 cc 2-propanol by the dropwise addition of the mixture to the product every 20-25 seconds for forty-four hours at 60°C yielded a product having much reduced acid numbers of 2.7/0.17 (as compared to Comparative Example 6) and a hydroxy number of 31.3. NMR($^{31}$P) data of the product showed:

| Structure | Wt % |
|---|---|

CH$_2$O
    \
     POR                    0.99%
    /
CH$_2$O

(RO)$_3$P=O              97.23

      O
      ‖
(RO)POP                  1.79%
      |
      O
      P

The combined total for cyclic (0.99%) and linear (1.79%) anhydrides was 2.78%.

COMPARATIVE EXAMPLE 8

This Example illustrates the ethylene oxide propylene oxide/stannous octoate treatment known to the prior art, of a product formed by the reaction of dimethyl methylphosphonate and P$_2$O$_5$.

Dimethyl methylphosphonate (4.03 moles) and P$_2$O$_5$ (3.52 moles) was reacted at 120°C for ten hours followed by reaction with propylene oxide for five and one-half hours at 25°C to yield a product having an HCl acid number of 268. The propylene oxide addition was continued for an additional eleven hours at 60°C to reduce the HCl acid number to 230. Continuation of the treatment for an additional thirty-one hours at 80°C reduced the HCl acid number to 45. The addition of 0.78% stannous octoate and reaction at 80°C for thirty-nine hours gave HCl/KOH acid numbers of 50.5/2.2.

Treatment of the foregoing product with absolute ethanol and propylene oxide at 25°C for forty-four hours yielded a product having HCl/KOH acid numbers of 47.3/2.5. Continuation of the treatment for forty-nine hours at 50°C gave acid numbers of 55.2/3.4. A final treatment with ethylene oxide for four hours at 50°C gave acid numbers of 46.1/3.9.

NMR analysis ($^{31}$P) showed a content of 18.4% cyclic and linear anhydride and 6.1% cyclic anhydride which are deemed to be a source of latent acidity.

EXAMPLE 9

This Example illustrates the technique of the instant invention with a product formed by the reaction of dimethyl methylphosphonate and P$_2$O$_5$.

Dimethyl methylphosphonate (4.18 moles) and P$_2$O$_5$ (2.32 moles) were reacted at 110°-120°C for four and one-half hours and were then treated with propylene oxide for four hours at 60°C to yield a crude product having HCl/KOH acid numbers of 287/143.6. This crude product was then treated with ethylene oxide for an additional four hours at 65°C to yield a product having acid numbers of 247/98.8.

The product obtained after the ethylene oxide treatment was treated with a mixture of 3 triethylamine in 100 cc isopropanol as indicated in Example 7 in the presence of 0.6% stannous octoate for forty hours at 65°C-80°C to yield a product having much reduced acid numbers of 7.4/0.31. Stripping of this product at 32°C under a pressure of 0.5 mm Hg yielded a product having reduced acid numbers of 8.6/0.31 (as compared to Comparative Example 8).

The $^{31}$P NMR analysis showed a content of 5.51% cyclic anhydride and 1.4% cyclic anhydride which was significantly lower than the preceding Example.

The foregoing Examples illustrate certain embodiments of the present invention.

## Claims

1. A method of removing latent acidity from an organophosphorus condensation product which comprises treating the product with a combination of 0.1-5 wt% Lewis acid catalyst, at least 1 wt% alcohol, and 0.05 to 5 wt% organoamine.

2. A method according to claim 1, characterized in that the amount of organoamine is from about 0.1% to about 1.0%, by weight of the material treated.

3. A method according to claim 1 or 2, characterized in that the organoamine is a triorganoamine.

4. A method according to claim 1 or 2, characterized in that the organoamine is a trialkylamine.

## Patentansprüche

1. Verfahren zur Entfernung von latenter Acidität aus einem Organophosphor-Kondensationsprodukt durch Behandlung des Produktes mit einer Kombination aus 0,1 bis 5 Gew.% Lewissäure-Katalysator, mindestens 1 Gew.% Alkohol und 0,05 bis 5 Gew.% Organoamin.

2. Verfahren nach Anspruch 1, dadurch gekennzeichnet, dass der Anteil an Organoamin etwa 0,1% bis etwa 1,0%, bezogen auf das Gewicht des behandelten Materials, beträgt.

3. Verfahren nach den Ansprüchen 1 oder 2, dadurch gekennzeichnet, dass das Organoamin ein Triorganoamin ist.

4. Verfahren nach Anspruch 1 oder 2, dadurch gekennzeichnet, dass das Organoamin ein Trialkylamin ist.

## Revendications

1. Un procédé d'élimination de l'acidité latente d'un produit de condensation organo-phosphoré qui comprend le traitement du produit avec une combinaison de 0,1-5% en poids d'un catalyseur à base d'acide de Lewis, d'au moins 1% en poids d'alcool, et de 0,05 à 5% en poids d'organoamine.

2. Un procédé selon la revendication 1, caractérisé en ce que la quantité d'organoamine est d'environ 0,1% à environ 1% en poids du produit traité.

3. Un procédé selon la revendication 1 ou 2, caractérisé en ce que l'organoamine est une triorganoamine.

4. Un procédé selon la revendication 1 ou 2, caractérisé en ce que l'organoamine est une trialkylamine.